Europäisches Patentamt

(19) European Patent Office

Office européen des brevets

(11) Numéro de publication : **0 082 158 B1**

(12) FASCICULE DE BREVET EUROPÉEN

(45) Date de publication du fascicule du brevet :
22.01.86

(51) Int. Cl.⁴ : **B 61 F 5/30**, B 60 G 11/52

(21) Numéro de dépôt : 82901848.0

(22) Date de dépôt : 18.06.82

(86) Numéro de dépôt international :
PCT/FR 82/00102

(87) Numéro de publication internationale :
WO/8204423 (23.12.82 Gazette 82/30)

(54) DISPOSITIF DE SUSPENSION ET DE LIAISON ENTRE UN CHASSIS DE BOGIE ET UNE BOITE D'ESSIEU.

(30) Priorité : 19.06.81 FR 8112085

(43) Date de publication de la demande :
29.06.83 Bulletin 83/26

(45) Mention de la délivrance du brevet :
22.01.86 Bulletin 86/04

(84) Etats contractants désignés :
AT BE CH DE GB LI LU NL SE

(56) Documents cités :
EP-A- 0 035 455
AT-B- 323 230
DE-A- 1 455 148
FR-A- 1 490 064
FR-A- 2 317 145
US-A- 2 836 130

(73) Titulaire : SOCIETE M T E Société anonyme
32, Quai de Dion Bouton
F-92800 Puteaux (FR)

(72) Inventeur : PINTO, Georges
12bis Paquier Fane
F-71150 Chagny (FR)

(74) Mandataire : Lejet, Christian
Société JEUMONT-SCHNEIDER 31-32, Quai de Dion
Bouton
F-92811 Puteaux Cedex (FR)

Jouve, 18, rue St-Denis, 75001 Paris, France

## Description

La présente invention se rapporte à un dispositif assurant la suspension verticale du châssis d'un bogie et la liaison longitudinale et transversale de chaque boîte et dudit châssis dans un bogie ferroviaire moteur ou porteur.

Dans une suspension de bogie, il faut prévoir une élasticité dans le sens vertical entre le châssis de bogie et chaque boîte d'essieu. Il faut par ailleurs que chaque boîte d'essieu soit guidée par rapport au châssis, longitudinalement et transversalement.

On connaît différents types de bogie dans lesquels des plots élastiques sont montés entre le châssis de bogie et chaque boîte d'essieu.

Dans certains bogies, la suspension et la liaison entre le châssis et chaque boîte d'essieu sont réalisées uniquement à l'aide de plots en élastomère encadrant cette boîte d'essieu. Chaque plot élastique est logé entre deux faces d'appui parallèles et faiblement inclinées par rapport à la verticale. Les plots sont disposés deux à deux en dièdres dont les plans bissecteurs sont verticaux, cette disposition permettant de supporter une charge verticale en contraintes combinées de compression et cisaillement. La rigidité suivant le sens vertical n'est pas négligeable.

Sur d'autres bogies, des ressorts hélicoïdaux destinés à assurer la suspension verticale sont associés à des plots en élastomère assurant les liaisons élastiques. Sur certains bogies chaque plot en élastomère est logé entre deux faces d'appui parallèles et faiblement inclinées par rapport à la verticale. Ces plots élastiques sont disposés deux à deux en dièdres dont les plans bissecteurs sont verticaux de manière que les charges verticales soient supportées en contraintes combinées de compression et cisaillement. Les plots en élastomère sont montés en parallèle avec les ressorts de suspension verticale. Cet agencement perturbe le fonctionnement en particulier aux sollicitations à fréquences élevées.

Sur d'autres bogies la suspension et la liaison entre le châssis et la boîte d'essieu sont réalisées par un ressort hélicoïdal et des plots élastiques qui encadrent la boîte d'essieu. Chaque plot élastique est logé entre deux faces d'appui verticales et le matériau élastomère est précontraint par écrasement. Sous l'effet du fluage la précontrainte diminue dans le temps.

Le brevet US-2 836 130 décrit un dispositif dans lequel le châssis de bogie s'appuie sur la boîte d'essieu par un ressort, réalisé de préférence en caoutchouc, la liaison longitudinale entre la boîte d'essieu et le châssis étant assurée par des plots élastiques ou à friction. Dans ce dispositif, la précontrainte exercée sur les plots n'évolue pas dans le temps, toutefois elle évolue au cours des oscillations de la suspension.

La présente invention a pour objet un dispositif assurant la suspension verticale d'un châssis de bogie et la liaison longitudinale et transversale de chaque boîte d'essieu et capable de procurer, sans perturber la suspension verticale, une certaine élasticité radiale et axiale de l'essieu. Ce dispositif utilise des plots — en matériau élastomère — qui sont précontraints, et est conçu de manière telle que la précontrainte n'évolue pas au cours des oscillations de la suspension. De ce fait, les caractéristiques de guidage sont constantes et indépendantes du fluage du matériau et la dynamique verticale de la suspension n'est pas modifiée. Cette dynamique est cependant modifiable par construction de par le choix des caractéristiques des élastomères utilisés.

Le dispositif de suspension et de liaison d'un châssis de bogie à une boîte d'essieu, conforme à l'invention, comprend comme connu par US-A-2 836 130, un ressort de suspension verticale par lequel le châssis de bogie s'appuie sur la boîte d'essieu en créant un couple de rotation sur cette boîte et deux liaisons, constituées chacune par au moins un plot élastique et montées écartées en altitude entre le châssis de bogie et la boîte d'essieu de manière à être comprimées lorsque la boîte d'essieu tend à tourner sous l'action du couple de rotation. Selon la partie caractérisante de la revendication 1, les caractéristiques essentielles de l'invention sont, d'une part que le couple de rotation est donné par deux ressorts de suspension de type ressort hélicoïdal, montés de part et d'autre du plan vertical passant par l'axe de l'essieu, et que le couple de rotation est sensiblement constant et indépendant des mouvements verticaux de l'essieu, le produit de la raideur d'un ressort par la distance de ce ressort par rapport au plan vertical étant sensiblement égal au produit de la raideur de l'autre ressort par la distance de ce ressort par rapport au plan vertical et, d'autre part, que chaque plot élastique forme une pièce monobloc dont les sections terminales sont fixées à une face d'appui du châssis de bogie et à une face d'appui de la boîte d'essieu de manière que l'effort de compression dû aux ressorts de suspension entraîne une rigidité de cisaillement faible dans le sens vertical.

La demande de brevet EP-A-0 035 455 publiée le 09-09-81 (état de la technique selon l'article 54 (3) de la CBE) décrit un dispositif de suspension correspondant au préambule de la revendication 1, dans lequel le couple de rotation est engendré par un seul ressort hélicoïdal et chaque plot élastique forme une pièce monobloc dont les sections terminales sont fixées à une face d'appui du châssis de bogie et à une face d'appui de la boîte d'essieu de manière que l'effort de compression dû au ressort de suspension entraîne une rigidité de cisaillement faible dans le sens vertical.

L'invention va maintenant être décrite avec plus de détails en se référant à un mode de réalisation donné à titre d'exemple et représenté par les dessins annexés.

La figure 1 est une vue en élévation du dispositif de suspension et de liaison monté entre le châssis de bogie et une boîte d'essieu.

La figure 2 représente une coupe selon A-A de la figure 1.

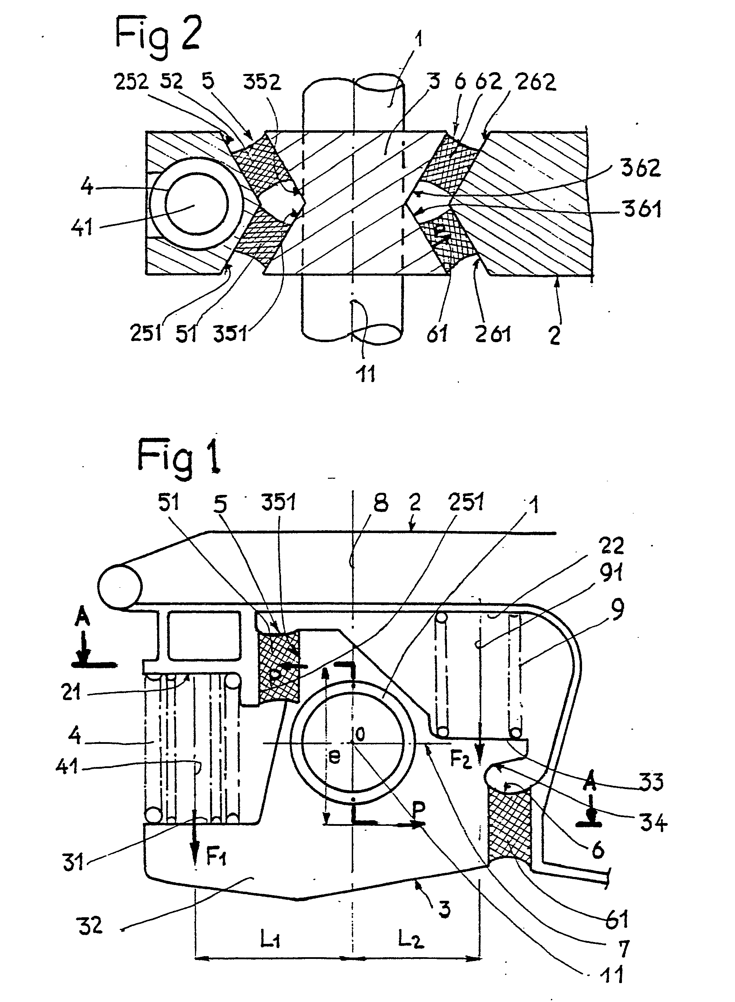

Le bogie représenté par les figures 1 et 2 comporte un châssis de bogie 2 qui est suspendu sur un train roulant comprenant des essieux 1. Chaque essieu est équipé de deux boîtes d'essieu 3. La suspension verticale associée à chaque boîte d'essieu est assurée par deux ressorts de suspension verticale 4 et 9 du type ressorts hélicoïdaux en acier. Chaque ressort hélicoïdal 4 ou 9 peut être constitué soit d'un seul ressort soit de plusieurs ressorts montés coaxialement. Chaque ressort hélicoïdal 4 ou 9 est monté verticalement entre le châssis de bogie et la boîte d'essieu. Les deux ressorts sont montés de part et d'autre du plan vertical 8 passant par l'axe d'essieu.

Le ressort 4 est logé de manière à être comprimé entre une portée supérieure horizontale 21 du châssis et une portée inférieure horizontale 31 ménagée sur la console 32 de la boîte d'essieu. L'axe vertical 41 de ce ressort 4 est décalé du plan vertical 8 d'une distance non nulle $L_1$. Le deuxième ressort 9 est logé de manière à être comprimé entre une portée supérieure horizontale 22 du châssis et une portée inférieure horizontale 33 ménagée sur la console 34 de la boîte d'essieu. L'axe vertical 91 de ce ressort 9 est décalé par rapport au plan vertical 8 d'une distance non nulle $L_2$. Le positionnement des ressorts 4 et 9 par rapport au plan vertical 8 passant par l'axe d'essieu est tel que le corps de la boîte d'essieu est soumis à deux forces $F_1$ et $F_2$ situées à des distances respectives $L_1$ et $L_2$ du plan vertical 8 et est soumis de ce fait à un couple de rotation positif $C = F_1L_1 - F_2L_2$. Pour que ce couple C reste constant au cours des oscillations verticales de l'essieu les raideurs $K_1$ du ressort 4 et $K_2$ du ressort 9 doivent répondre à la relation : $K_1L_1 = K_2L_2$.

La boîte d'essieu est liée au châssis de bogie par des liaisons élastiques 5 et 6 qui sont constituées chacune de préférence par deux plots élastiques. La liaison élastique 5 est constituée par les deux plots élastiques 51, 52, la liaison élastique 6 étant constituée par les deux plots 61, 62. La liaison élastique 5 et la liaison élastique 6 sont montées écartées en altitude pour équilibrer le couple appliqué à la boîte d'essieu.

La liaison élastique supérieure constituée par les plots élastiques 51 et 52 est située du côté du ressort 4 et de la résultante des forces $F_1$, $F_2$ par rapport au plan vertical 8 passant par l'axe 11 de l'essieu. Elle est située au-dessus du plan horizontal 7 passant par l'axe 11 de révolution de l'essieu, entre le plan vertical passant par l'axe du ressort hélicoïdal 4 et le plan vertical 8 passant par cet axe 11. La liaison élastique inférieure formée par les plots 61-62 est située du côté du ressort 9 par rapport au plan vertical 8 passant par l'axe de l'essieu. Les liaisons élastiques 5 et 6 sont situées de part et d'autre du plan°vertical 8 passant par l'axe de révolution 11 de l'essieu et également de part et d'autre du plan horizontal 7.

Chaque plot élastique a une forme prismatique ou cylindrique dont les sections droites terminales sont parallèles et fixées respectivement contre une face d'appui de la boîte d'essieu et une face d'appui du châssis de bogie.

Ainsi les plots 51 et 52 sont enserrés respectivement entre des faces d'appui 351 et 352 de la boîte d'essieu qui font face au ressort 4 et des faces d'appui 251 et 252 opposées qui sont ménagées sur le châssis de bogie. Les plots inférieurs 61 et 62 sont enserrés respectivement entre des faces d'appui 361 et 362 de la boîte d'essieu et des faces d'appui 261 et 262 opposées, ménagées sur le châssis de bogie. Les deux faces d'appui de chaque plot élastique sont sensiblement verticales.

Les faces d'appui supérieures 351, 352 de la boîte relative à la liaison supérieure sont orientées du côté de la résultante des forces $F_1$ et $F_2$. Les faces d'appui inférieures 361, 362 de la boîte sont tournées du côté opposé à cette résultante. Les faces d'appui de la boîte d'essieu 351, 352 et 361, 362 sont ainsi en opposition. Du fait de leur disposition, les plots élastiques sont comprimés lorsque la boîte d'essieu tend à pivoter sous l'action du couple appliqué par les ressorts 4 et 5.

Chaque plot élastique 51, 52, 61, 62 constitue une pièce monobloc capable de supporter, sans possibilité de séparation, de glissement ou frottement de ses parties constitutives, un effort de traction, compression ou cisaillement ou un effort combiné appliqué entre ses sections terminales qui sont fixées sans possibilité de séparation, de glissement, respectivement à une face d'appui de la boîte d'essieu et à une face d'appui du châssis de bogie. Les sections terminales — de préférence planes — sont constituées par des plaques métalliques rigides adhérées au matériau élastomère ou caoutchouc et immobilisées respectivement contre les faces d'appui de la boîte d'essieu et du châssis de bogie. Chaque plot élastique comprend entre les plaques métalliques d'extrémité un matériau élastomère. Il peut être constitué par une structure en sandwich ou feuilletée réalisée par des plaques en élastomère et des plaques métalliques disposées alternativement, les plaques en matériau élastomère étant adhérées aux plaques métalliques intercalaires.

Les faces d'appui des plots en élastomère sur la boîte d'essieu et le châssis de bogie peuvent être disposées selon l'une des différentes dispositions actuellement connues, en fonction des performances requises pour le guidage de la boîte d'essieu et en fonction du type de bogie. Les faces d'appui des plots, soit contre la boîte d'essieu soit contre le châssis de bogie, qui sont de préférence planes pourraient néanmoins être constituées par des surfaces cylindriques.

Les deux faces d'appui de chaque liaison élastique soit sur le châssis de bogie soit sur la boîte d'essieu ont une disposition en dièdre comme cela est représenté sur la figure 2. Les deux faces d'appui 251 et 252 sur le châssis des deux plots élastiques supérieurs de la liaison élastique supérieure et les deux faces d'appui 351 et 352 opposées de la boîte d'essieu font alors des dièdres ayant un plan bissecteur commun perpendiculaire à l'axe de révolution de l'essieu. De même les deux faces d'appui 261 et 262 sur le châssis des deux plots élastiques inférieurs et les deux faces d'appui 361 et 362 opposées sur la boîte d'essieu font des dièdres ayant un plan bissecteur commun perpendiculaire à l'axe de révolution de l'essieu. Dans ce type de disposition, les plots élastiques 51 et 52 sont montés en chevron, symétriquement par rapport au plan vertical passant par l'axe 41 et perpendiculaire à l'axe de révolution de l'essieu. Les plots élastiques inférieurs 61 et 62 sont également montés en chevron, symétriquement par rapport au plan défini précédemment.

Les plots élastiques sont identiques du point de vue des dimensions et du point de vue de la constitution.

Le ressort de suspension verticale 4 et les plots élastiques supérieurs 51, 52 sont montés vers l'extérieur du bogie par rapport au plan vertical 8 passant par l'axe de révolution de l'essieu. Le ressort de suspension verticale 9 et les plots élastiques inférieurs 61, 62 sont montés vers le centre du bogie par rapport à ce même plan vertical 8.

Le fonctionnement du dispositif va maintenant être décrit ci-dessous.

Les ressorts de suspension verticale 4 et 9 exercent sur la boîte d'essieu un couple C égal à $F_1L_1 - F_2L_2$ qui tend à faire tourner la boîte d'essieu autour de son axe 11 en comprimant les plots élastiques 51, 52, 61 et 62. Ces plots élastiques sont soumis à un effort de compression P défini par $P = C/e$, e correspondant à l'écart en altitude entre la liaison élastique supérieure et la liaison élastique inférieure. Cet effort est indépendant des oscillations verticales de l'essieu. En effet, pour un déplacement vertical h de l'essieu, la force $F_1$ varie d'une quantité $f_1$ telle que $f_1 = K_1h$ et la force $F_2$ varie d'une quantité $f_2 = K_2h$. La variation du couple sur la boîte d'essieu est telle que $dC = f_1L_1 - f_2L_2$ soit $dC = K_1hL_1 - K_2 \quad hL_2 = h \quad (K_1L_1 - K_2L_2)$. Le second facteur de ce produit étant nul par construction, la variation de couple dC est nulle. Le couple agissant sur la boîte d'essieu est constant et indépendant des mouvements de l'essieu. La précontrainte P est donc également constante. Les propriétés mécaniques du matériau élastomère des plots 51, 52, 61 et 62 sont telles que l'effort de compression P entraîne une rigidité de cisaillement — dans le sens vertical — faible mais ajustable suivant la nature de l'élastomère. Cette rigidité n'est pas perturbée lors des déplacements verticaux de l'essieu. Toutefois cette valeur de rigidité peut être choisie par construction à la valeur souhaitée suivant la nature de l'élastomère utilisé. En particulier il est possible de choisir une composition de l'élastomère qui assure l'amortissement désiré des effets dynamiques dans le plan vertical.

Dans le sens radial de l'essieu, c'est-à-dire dans le sens longitudinal matérialisé par la direction 7, les plots élastiques assurent avec une certaine flexibilité, l'entraînement longitudinal de l'essieu. Dans le sens axial de l'essieu, c'est-à-dire parallèlement à l'axe de révolution 11, les plots élastiques assurent avec une certaine flexibilité, le guidage latéral ou transversal de l'essieu.

Les axes longitudinaux des plots (parallèles aux faces latérales, sont convergents comme sur la figure 2 ou perpendiculaires aux axes d'essieux. Dans ce dernier cas, certaines plaques intercalaires peuvent être communes à deux plots élastiques adjacents formant un chevron.

## Revendications

1. Dispositif de suspension et de liaison d'un châssis de bogie (2) à une boîte d'essieu (3) comprenant un ressort (4) de suspension verticale par lequel le châssis de bogie s'appuie sur la boîte d'essieu en créant un couple de rotation sur cette boîte et deux liaisons (5, 6) constituées chacune par au moins un plot élastique (51, 52), (61, 62) et montées écartées en altitude entre le châssis de bogie et la boîte d'essieu de manière à être comprimées lorsque la boîte d'essieu tend à tourner sous l'action du couple de rotation, caractérisé en ce que ledit couple de rotation est donné par deux ressorts de suspension (4, 9), de type ressort hélicoïdal, montés de part et d'autre du plan vertical (8) passant par l'axe (11) de l'essieu, en ce que ledit couple de rotation est sensiblement constant et indépendant des mouvements verticaux de l'essieu, le produit de la raideur $K_1$ du ressort (4) par la distance $L_1$ de ce ressort par rapport audit plan vertical (8) étant sensiblement égal au produit de la raideur $K_2$ du ressort (9) par la distance $L_2$ de ce ressort par rapport audit plan vertical (8) et en ce que chaque plot élastique (51, 52, 61, 62) forme une pièce monobloc dont les sections terminales sont fixées à une face d'appui (251, 252, 261, 262) du châssis de bogie et à une face d'appui (351, 352, 361, 362) de la boîte d'essieu de manière que l'effort de compression dû aux ressorts de suspension (4, 9) entraîne une rigidité de cisaillement faible dans le sens vertical.

2. Dispositif selon la revendication 1, caractérisé en ce que les liaisons (5, 6) sont disposées de part et d'autre du plan vertical (8) passant par l'axe (11) de l'essieu.

3. Dispositif selon l'une quelconque des revendications précédentes, caractérisé en ce que les liaisons (5, 6) sont disposées de part et d'autre du plan horizontal (7) passant par l'axe (11) de l'essieu.

4. Dispositif selon l'une quelconque des revendications précédentes, caractérisé en ce que les deux faces d'appui (251, 351, 252, 352, 261, 361, 262, 362) de chaque plot élastique (51, 52, 61, 62) respectivement sur le châssis de bogie et sur la boîte d'essieu sont sensiblement verticales.

5. Dispositif selon l'une quelconque des revendications précédentes, caractérisé en ce que les plots supérieurs (51, 52) et les plots inférieurs (61, 62) sont montés de préférence symétriquement par rapport à l'axe (11) de l'essieu.

6. Dispositif selon l'une quelconque des revendications précédentes, caractérisé en ce que la liaison supérieure (5) est montée du côté de la résultante des forces agissant sur les ressorts par rapport au plan vertical (8) passant par l'axe (11) de l'essieu.

7. Dispositif selon l'une quelconque des revendications précédentes, caractérisé en ce que les faces d'appui (251, 252, 351, 352, 261, 262, 361, 362) des plots élastiques sur la boîte d'essieu et sur le châssis de bogie forment des dièdres dont les plans bissecteurs sont perpendiculaires à l'axe (11) de l'essieu.

**Claims**

1. Device for suspension and connection between a bogie frame (2) and an axle-box (3), comprising a vertical suspension spring (4) by which the bogie frame bears on the axle-box, producing a torque on the said box, and two connections (5, 6) each constituted by at least one elastic block (51, 52), (61, 62) and mounted spaced from one another in the sense of height between the bogie frame and the axle-box, in such a manner as to be compressed when the axle-box tends to turn under the action of the torque, characterised in that the said torque is provided by two suspension springs (4, 9) of the helical spring type which are mounted at the two respective sides of the vertical plane (8) passing through the axis (11) of the axle, in that the said torque is substantially constant and independent of the vertical movements of the axle, the product of the stiffness $K_1$ of the spring (4) by the distance $L_1$ of this spring relatively to the said vertical plane (8) being substantially equal to the product of the stiffness $K_2$ of the spring (9) by the distance $L_2$ of this spring relatively to the said vertical plane (8), and in that each elastic block (51, 52, 61, 62) forms a one-piece element whose end sections are fixed to a supporting face (251, 252, 261, 262) of the bogie frame and to a supporting face (351, 352, 361, 362) of the axle-box in such a manner that the compression force due to the suspension springs (4, 9) produces a low stiffness under shear in the vertical sense.

2. Device according to claim 1, characterised in that the connections (5, 6) are arranged at the two sides of the vertical plane (8) passing through the axis (11) of the axle.

3. Device according to any one of the preceding claims, characterised in that the connections (5, 6) are arranged at the respective sides of the horizontal plane (7) passing through the axis (11) of the axle.

4. Device according to any one of the preceding claims, characterised in that the two faces (251, 351, 252, 352, 261, 361, 262, 362) supporting each elastic block (51, 52, 61, 62) respectively on the bogie frame and on the axle-box are substantially vertical.

5. Device according to any one of the preceding claims, characterised in that the upper blocks (51, 52) and the lower blocks (61, 62) are mounted preferably symmetrically relatively to the axis (11) of the axle.

6. Device according to any one of the preceding claims, characterised in that the upper connection (5) is mounted in the region of the resultant of the forces acting on the springs relatively to the vertical plane (8) extending through the axis (11) of the axle.

7. Device according to any one of the preceding claims, characterised in that the supporting faces (251, 252, 351, 352, 261, 262, 361, 362) for the elastic blocks on the axle-box and on the bogie frame form dihedrals the bisector planes of which are perpendicular to the axis (11) of the axle.

**Patentansprüche**

1. Vorrichtung zur Aufhängung und Verbindung eines Fahrgestells (2) mit einem Achskasten (3), versehen mit einer senkrechten Aufhängungsfeder (4), durch welche das Fahrgestell sich an dem Achskasten abstützt unter Erzeugung eines Drehmomentes an diesem Kasten, und mit zwei Verbindungen (5, 6), welche jeweils durch wenigstens einen elastischen Zapfen (51, 52), (61, 62) gebildet sind und die höhenversetzt zwischen dem Fahrgestell und dem Achskasten derart angebracht sind, daß sie zusammengedrückt werden können, wenn der Achskasten bestrebt ist, sich unter der Wirkung des Drehmoments zu drehen, dadurch gekennzeichnet, daß das genannte Drehmoment durch zwei Aufhängungsfedern (4, 9) vom Schraubenfedertyp gegeben ist, welche auf der einen bzw. anderen Seite der senkrechten Ebene (8) angebracht sind, welche durch die Achse (11) der Achsengruppe verläuft, daß das genannte Drehmoment im wesentlichen konstant und unabhängig von den senkrechten Bewegungen der Achsengruppe ist, das Produkt der Steifigkeit $K_1$ der Feder (4) und aus der Entfernung $L_1$ dieser Feder von der genannten senkrechten Ebene (8) im wesentlichen gleich dem Produkt der Steifigkeit $K_2$ der Feder (9) und der Entfernung $L_2$ dieser Feder von der genannten senkrechten Ebene (8) ist, und daß jeder elastische Zapfen (51, 52, 61, 62) einen einteiligen Block bildet, dessen Endabschnitte an einer Abstützfläche (251, 252, 261, 262) des Fahrgestells und an einer Abstützfläche (351, 352, 361, 362) des Achskastens befestigt sind, dergestalt, daß die auf den Aufhängungsfedern (4, 9) beruhende Kompressionsbeanspruchung eine geringe Schersteifigkeit in senkrechter Richtung verursacht.

2. Vorrichtung nach Anspruch 1, dadurch gekennzeichnet, daß die Verbindungen (5, 6) auf der einen bzw. der anderen Seite der senkrechten Ebene (8) angeordnet sind, welche durch die Achse (11) der Achsgruppe verläuft.

3. Vorrichtung nach Anspruch 1 oder 2, dadurch gekennzeichnet, daß die Verbindungen (5, 6) auf der einen bzw. anderen Seite der waagerechten Ebene (7) angeordnet sind, welche durch die Achse (11) der Achsgruppe verläuft.

4. Vorrichtung nach einem der vorstehenden Ansprüche, dadurch gekennzeichnet, daß die zwei Abstützflächen (251, 351, 252, 352, 261, 361, 262, 362) jedes elastischen Zapfens (51, 52, 61, 62) am Fahrgestell bzw. am Achskasten im wesentlichen senkrecht sind.

5. Vorrichtung nach einem der vorstehenden Ansprüche, dadurch gekennzeichnet, daß die oberen Zapfen (51, 52) und die unteren Zapfen (61, 62) vorzugsweise symmetrisch in bezug auf die Achse (11) der Achsgruppe angeordnet sind.

6. Vorrichtung nach einem der vorstehenden Ansprüche, dadurch gekennzeichnet, daß die obere Verbindung (5) auf der Seite der Kräfteresultierenden angebracht ist, welche auf die Federn einwirkt, bezogen auf die senkrechte Ebene (8), welche durch die Achse (11) der Achsgruppe verläuft.

7. Vorrichtung nach einem der vorstehenden Ansprüche, dadurch gekennzeichnet, daß die Abstützflächen (251, 252, 351, 352, 261, 262, 361, 362) der elastischen Zapfen an dem Achskasten bzw. an dem Fahrgestell Zweiflache bilden, deren winkelhalbierende Ebenen senkrecht zur Achse (11) der Achsgruppe sind.

0 082 158

Fig 2

Fig 1